# EUROPEAN PATENT APPLICATION

(11) **EP 4 621 949 A1**
(43) Date of publication of application: **24.09.2025**
(21) Application number: 24164735.3
(22) Date of filing: 20.03.2024
(51) Int. Cl.: H01M 50/204, H01M 10/613, H01M 10/625, H01M 10/6556, H01M 50/358, H01M 50/383

(54) **QUENCHING ARRANGMENT, ENERGY STORAGE DEVICE AND VEHICLE COMPRISING SAME**

(71) Applicant: Airbus S.A.S., 31700 Blagnac (FR)
(72) Inventor: Friedl, Stephan, Taufkirchen (DE)
(74) Representative: OTN Airbus SAS

(57) **Abstract**

A quenching arrangement (10), an energy storage device (2), in particular an electrochemical battery for a vehicle (1), and a vehicle (1) are provided. For quenching exhausts (E) of the energy storage device (2) which may be produced due to a technical failure of at least one energy storage unit (20) of the energy storage device (2), the quenching arrangement (10) comprises a quenching agent (18) for quenching the exhausts (E), wherein the quenching agent (18) is contained on the outside of and/or within the at least one energy storage unit (20).

## Description

### Technical Field

The present disclosure relates to the field of protecting energy storage devices in the event of thermal runaway reactions. In particular, the disclosure relates to a quenching arrangement for quenching exhausts of an energy storage device, to an energy storage device, in particular an electrochemical battery for a vehicle, and to a vehicle, in particular an aircraft.

### Technical Background

Vehicles, including aircrafts, have been using energy storage devices, such as electrochemical batteries, for a long time to store energy. Electrochemical batteries are commonly used as backups or for bridging certain energy needs for vehicles that would normally generate electrical energy through generators driven by combustion engines, for example, for powering electronics and/or auxiliary devices. Nowadays, electrochemical batteries are increasingly used for storing high amounts for of electric energy used for driving the vehicles themselves, and/or to buffer electric energy in vehicles having alternative or hybrid energy conversion systems, such as fuel cells.

Therefore, the energetic capacity and density of energy storage devices, in particular electrochemical batteries, is continuously increasing. In the event of electrical and/or mechanical failures of the energy storage devices, their high capacity can lead to thermal runaway events during which certain exhausts containing chemical decomposition and and/or combustion products of components of the energy storage devices may be produced which can have harmful effects due to their high temperature, pressure and possibly toxicity. Some prior art suggests mitigating possible harmful effects by means of inerting or cooling agents, absorption, or catalytic conversion.

US 2023/231268 A1, for example, describes a system including a battery mounting area, a venting area fluidly isolated from the battery mounting area, and a battery cell arranged at least partially within the battery mounting area. The battery cell includes at least one safety vent that is fluidly coupled to the venting area. An inerting and/or suppression system may be arranged in fluid communication with the venting area. The inerting or suppression system includes at least one spray nozzle associated with the venting area and a source of a suppression agent and/or a source of inerting agent. The sources of suppression agent and inerting agent are in the form of self-contained pressure vessels. Examples of suitable suppression agents or inerting agents include, but are not limited to water, clean agent, inert gas, or other approved media. The source of suppression agent and/or the source of inerting agent is arranged in fluid communication with the nozzles via a delivery path defined by a delivery piping system. Upon detection of the presence of exhaust materials within the venting area, inerting agent from the source thereof, is allowed to flow through the delivery piping system to the one or more spray nozzles for release directly into the venting area.

CN 214552549 U deals with a power lithium battery pack thermal runaway flue gas catalytic purification system which comprises a shell, and a battery pack is mounted in the shell; a smoke sensor is arranged on the top lower surface of the shell; the smoke sensor is connected with the controller through a power signal line; interlayers are arranged on the top of the shell and the top of the shell and communicate with each other, and air purification materials are arranged in the interlayers; the lower surface of the top of the shell is provided with a top one-way valve communicated with the interlayer, the lower surface of the bottom of the shell is provided with a bottom one-way valve communicated with the interlayer of the shell, the bottom one-way valve is connected with a sucking pump through an exhaust pipe, and the sucking pump is controlled through a controller. Smoke generated by battery combustion is treated by adopting an adsorbent and a catalyst. Toxic smoke is converted into purified gas through adsorption and catalytic conversion, and the purified gas is discharged into the air.

US 2019/296302 A1 relates to articles (e.g., containers, battery packs, etc.) including a lithium material (e.g., one or more lithium-containing batteries) housed therein. The articles include sulphur hexafluoride located within an interior compartment of the article to provide an inert atmosphere within the interior compartment. Methods of inerting such articles (e.g., containers, battery packs, etc.) with sulphur hexafluoride as well as conveyed (e.g., pumped, blown, etc.) looped cooling apparatuses and systems are also described.

WO 2010/032313 A1 describes a mobile unit carrying a secondary battery and comprising a vehicle body, a first duct disposed in the vehicle body, having an ejection port for ejecting an exhaust gas, and connected to the exhaust port when a secondary battery module is mounted, and a harm-preventing unit for making the exhaust gas in the first duct harmless. The first duct is connected to an exhaust port for discharging the exhaust gas ejected from the ejection port to the outside of the vehicle body. A cooling gas cylinder may be connected to the first duct via a valve. The cooling gas cylinder is filled with a cooling gas. Although the valve is normally closed, in the emergency the valve is opened, and the cooling gas is introduced into the first duct. Furthermore, a radiator, for example, a water-cooled radiator may be provided to reduce the temperature of the exhaust gas by heat exchange.

EP 4 165 712 B1, EP 3 492 388 B1, US 11 658 363 B2 WO 2022/029380 A1, DE 10 2017 128251 A1, and EP 2 942 226 A1 deal with alternative measures according to the prior art for mitigating potentially harmful effects in the event of thermal runaway reactions of energy storage devices aim at cooling or mixing arrangements for lowering a temperature of the exhausts, or for their containment or discharge in a controlled manner.

Besides the gaseous compounds, exhausts from energy storage devices may contain floating particles which can originate from chemical decomposition and/or physical disintegration of the energy storage devices during thermal runaway reactions. These particles can be harmful in that on the one hand, they may ignite certain gaseous compounds and transport critically high energy amounts, due to their high temperatures, and on the other hand could have toxic properties. The prior art addresses these issues by mainly suggesting filter technologies, or alike, to filter out harmful particles from the exhausts.

Systems and methods known from the prior art for mitigating potentially harmful effects of exhausts of energy storage devices in the event of thermal runaway reactions may not meet conditions arising from increasing energetic capacity and density of the energy storage devices, in particular electrochemical batteries. In order to meet such conditions and satisfy technical safety specifications, known systems could bring certain weight, complexity, and installation space issues. These in turn may compete with operational efficiency of vehicles, especially aircrafts demanding preferably simple and light solutions in order to not compromise flight range and passenger number requirements.

### Summary

It may thus be seen as an object to provide protective measures suitable for meeting conditions arising from increasing energetic capacity and density of energy storage devices. Furthermore, it can be seen as an object, to fulfil technical safety specifications for energy storage devices, in particular in the event of runaway reactions of electric chemical batteries, used for powering vehicles, such as aircrafts, without overly compromising their flight range and transport capabilities. These objects are at least partly achieved by the subject-matter of the independent claims.

According to an aspect, a quenching arrangement for quenching exhausts of an energy storage device, such as an electrochemical battery in a vehicle, is provided, which may be produced due to a technical failure of at least one energy storage unit of the energy storage device, the quenching arrangement comprising a quenching agent for quenching the exhausts, wherein the quenching agent is contained on the outside of and/or within the at least one energy storage unit.

According to an aspect, an energy storage device, in particular an electrochemical battery for a vehicle, is provided, comprising a corresponding quenching arrangement for quenching exhausts which may be produced due to a technical failure of at least one energy storage unit of the energy storage device.

According to an aspect, a vehicle, in particular an aircraft, is provided, comprising a corresponding quenching arrangement and/or a corresponding energy storage device.

The quenching agent can be provided in a designated arrangement, e.g., located arranged directly on the in- or outside of an enclosure or housing of the at least one energy storage unit and can be particularly suited for quenching chemical exothermic reactions underlying runaway events on the spot, such that flames or blazes are inhibited, and thereby, temperatures and/or pressures of exhausts lowered or at least limited. This can help to prevent harmful effects of thermal runaway events at their core. Possible additional mitigation measures can then be specifically tailored to managing the quenched exhausts.

The proposed solution provides an alternative in reducing or shifting efforts for mitigating potentially harmful effects of failures in energy storage devices of all kinds of vehicles, including but not limited to aircraft. This includes energy storage devices for aircrafts comprising electrochemical batteries with high energetic capacity and density, as they may be used for aircraft propulsion purposes and/or as APUs, possibly in connection with fuel cell systems. The proposed solution paves way for highly efficient, simple, and lightweight protection measures for energy storage devices which are intrinsically safe in that neither external detection means, nor external energy or functional actuators are required for inhibiting harmful effects of exhausts due to thermal runaway events.

Further developments can be derived from the dependent claims and from the following description. Features described with reference to devices and arrangements may be implemented as method steps, or vice versa. Therefore, the description provided in the context of the quenching arrangement, energy storage device and/or vehicle applies in an analogous manner also to respective methods. In particular, the functions of the quenching arrangement, energy storage device, and/or vehicle and of their or its, respectively, components may be implemented as method steps of respective methods and the method steps may be implemented as functions of the quenching arrangement, energy storage device, and/or vehicle.

According to an embodiment of a quenching arrangement, the quenching agent is contained in a fluid within the at least one energy storage unit. The fluid may be provided as a liquid. For example, the storage unit can be a battery cell. The quenching agent can be contained in an electrolyte of the battery cell. Thereby, any unwanted exothermic reactions can be inhibited at an early stage within the energy storage unit.

According to an embodiment of a quenching arrangement, the quenching agent is held in at least one depot. The depot can be arranged in an advantageous manner to release the quenching agent at a location where unwanted exothermic reactions may occur. This further helps in inhibiting unwanted exothermic reactions at an early stage.

According to an embodiment of a quenching arrangement, the at least one depot is arranged along a pre-defined exhaust flow path for the exhausts. The exhaust flow path can be defined by the quenching arrangement. Thereby, the exhausts can be led to the at least one depot. This helps in quenching the exhausts in a controlled manner and thus to prevent or at least mitigate any potentially harmful effects of the exhausts.

According to an embodiment of a quenching arrangement, the at least one depot is arranged in the exhaust flow path such that the exhausts are forced to move past and/or be mixed with the quenching agent. The quenching agent can be held in the depot such that the quenching agent gets into contact with and/or is released into the exhausts. Thereby, the exhausts can be led past the at least one depot in order to be forced to be exposed to the quenching agent. This helps in further preventing or at least mitigating any potentially harmful effects of the exhausts.

According to an embodiment of a quenching arrangement, the exhaust flow path is at least in part provided by a conduit of the quenching arrangement having at least one inlet connected to the at least one energy storage unit. A manifold can provide multiple inlets to collect the exhausts. This further helps in quenching the exhausts in a controlled manner and thus to prevent or at least mitigate any potentially harmful effects of the exhausts.

According to an embodiment of a quenching arrangement, the quenching arrangement further comprises a particle separator for separating particles contained in the exhausts. The particle separator can comprise at least one cyclone vessel. A vessel inlet of the cyclone vessel can be connected to an outlet of the conduit. Thereby, potentially harmful particles, including particles which may be an ignition source for exhausts, can be separated from the exhaust gases in such a manner that the particles and/or the exhausts can be further treated or guided as required for preventing or at least mitigating any potentially harmful effects of the exhausts. Furthermore, the practical separator can help to prevent clogging of the quenching arrangement or any fluid path defined thereby, in that any components following the particle separator do not need to handle the separated particles, but can rather be designed in a manner to fulfil other functions, such as exhaust gas purification, filtering, or alike.

According to an embodiment of a quenching arrangement, the quenching arrangement further comprises a mixing unit configured to mix the exhausts with a cooling agent. The mixing unit may comprise a venturi nozzle for mixing the cooling agent with the exhausts. The cooling agent may comprise air, such as surrounding air. The mixing unit helps to lower an overall temperature of the exhausts. Alternatively, or additionally, any flammable components of the exhausts can be cooled down below a respective ignition temperature to avoid ignition of the exhausts.

The mixing unit provide an effective alternative, and/or additional solution for preventing or at least mitigating any potentially harmful effects of the exhausts. Furthermore, any parts of the quenching arrangement arranged downstream of the mixing arrangement can be designed such that they merely have to withstand lowered temperatures. In other words, the number of parts or component of the quenching arrangement that need to withstand high temperatures, and thus the overall complexity, weight and costs of the quenching arrangement can be reduced.

According to an embodiment of a quenching arrangement, the quenching arrangement further comprises a heat exchange unit configured to transfer heat from the exhausts to a cooling medium. The heat exchange unit may define at least a part of the exhaust flow path downstream of the mixing unit. The cooling medium may be guided along a coolant flow path through the heat exchange unit. The exhaust flow path and the coolant flow path may at least sectionwise extend in parallel to each other.

For example, the exhaust flow path and the coolant flow path may be arranged coaxially with respect to each other. The heat exchange unit may be configured as a parallel flow, cross flow, and/or counter flow heat exchanger. The heat exchange unit helps to lower an overall temperature of the exhausts. It can thereby provide another effective alternative, and/or additional solution for preventing or at least mitigating any potentially harmful effects of the exhausts.

As an additional and/or alternative aspect of a solution, an encompassing arrangement may be provided for encompassing and exhaust inlet and/or exhaust passage, manifold, and/or exhaust line at least partially defining a flow path of the exhausts. The encompassing arrangement may be part of the mixing unit and/or heat exchange unit. The encompassing arrangement may comprise a parallel flow portion, a counter flow portion is that a crossflow portion where a coolant flow path of the cooling medium is directed essentially in parallel, counter, and/or transverse, respectively, to the flow path of the exhausts and/or of the cooling medium itself. Thereby, specifically high cooling capacities can be provided at respective temperature levels as required.

Such a solution can help to provide particularly high cooling capacities where relatively high temperatures of the exhausts are to be expected. The encompassing arrangement can be axially put over respective exhaust inlets to be specifically cooled, thus preferably radially surrounding respective regions. Materials for respective mixer walls and/or cooler walls of the encompassing arrangement can be chosen such that they withstand relatively high temperatures and exhaust pressures, e.g., stainless steel, or alike. Although, respective part of the encompassing arrangement may thus be relatively heavy, this has the advantage, that high local cooling capacities can be provided, which in turn makes it possible to provide other parts of a duct arrangement for guiding the exhausts from rather lightweight materials with lower heat and/or pressure resistance than the encompassing arrangement.

As an additional and/or alternative aspect of a solution, the mixing unit and/or the heat exchange unit, in particular the encompassing arrangement, may provide exhaust cooling sections, self-cooling sections, and/or redirecting sections for cooling the exhausts, self-cooling the cooling medium, and/or a combination thereof. An overlap region may comprise the exhaust cooling sections, self-cooling sections, and/or redirecting sections. This helps in providing high cooling capacities at respective temperature levels as required.

As an additional and/or alternative aspect of a solution, a combined mixing and/or heat exchange unit can be provided. The combined mixing and/or heat exchange unit can include the encompassing arrangement and/or overlap regions. This may further help in can help to provide sufficient cooling capacity in regions where relatively high temperatures of the exhausts can be expected, and a quick, efficient quenching of the exhausts is to be achieved. Again, materials of a combined mixing and/or heat exchange unit may be chosen such that they withstand particularly high temperatures and pressures, thus enabling other sections, such as duct arrangements, to have lower cooling capacities in regions where relatively low temperatures of the exhausts are to be expected.

The combined mixing and/or heat exchange unit and/or the encompassing arrangement can be put over any exhaust inlet, exhaust passage, manifold and/or exhaust line at least partly defining the flow path of the exhausts, for example, in a funnel-like manner. Therefore, the combined mixing and/or heat exchange unit and/or the encompassing arrangement may have a frustoconical shape or any other kind of shape tapering along the flow path. The exhausts can enter at the bottom end of such a tapering shape to be funnelled through respective cooling and/or mixing means, including parallel flow portions, counter flow portions, crossflow portion, exhaust cooling section, self-cooling section, redirecting sections and/or inlet cooling section, in any form a number required, for example, while forming overlap regions where multiple exhaust flow paths and/or coolant flow paths may be arranged such that desired cooling capacities can be achieved at respective temperature levels. This helps in providing specifically high cooling capacities in regions where relatively high temperatures of the exhausts are to be expected, while alleviating respective requirements in regions where lower temperatures have to be expected, such as in duct arrangements connecting to inlet openings and/or outlet openings for taking in cooling medium and/or discharging exhausts, exhaust mixtures, respectively.

According to an embodiment of a quenching arrangement, the quenching agent is at least in part provided in the form of a powder. The exhausts may mix with and/or take-up the powder thus effectively quenching any unwanted exothermic reactions which may lead to, take place in and/or due to the exhausts. This further helps in quenching the exhausts in a controlled manner and thus to prevent or at least mitigate any potentially harmful effects of the exhausts.

According to an embodiment of a quenching arrangement, the quenching agent contains potassium bicarbonate. Potassium bicarbonate (also known as potassium hydrogencarbonate or potassium acid carbonate, having the chemical formula KHCOs) is solid at standard chemical temperature and pressure (STP) and is commonly used as a fire suppression agent. As a quenching agent or at least a part thereof, it can provide an effective and failsafe way for preventing or at least mitigating any potentially harmful effects of exothermic reactions, in particular runaway reactions.

According to an embodiment of a quenching arrangement, the quenching agent is configured to be propelled by and/or contains a propellant. For example, the propellant may be provided in a gas and/or powder cartridge. The propellant may be admixed to the powder. Propelling the quenching agent may help in quenching the exhausts very quickly and may thus enable to inhibit and/or interrupted exothermic reactions as soon as possible.

According to an embodiment of a quenching arrangement, the propellant contains nitrocellulose. Even though, nitrocellulose (also known as cellulose nitrate or guncotton) is highly flammable and reactive, it can help in propelling the quenching agent in a fast, yet controlled manner, such that the quenching agent can rapidly be brought into contact with the exhausts in a highly dispersed manner, thus allowing for very quickly inhibiting and/or interrupting exothermic reactions. This may further help in preventing or at least mitigating any potentially harmful effects of the exhausts and any exothermic reactions which may take place in energy storage devices.

### Brief Description of the Drawings

The subject matter will hereinafter be described in conjunction with the following drawing figures, wherein like numerals denote like elements, and wherein:
Fig. 1 is a schematic illustration of a vehicle in the form of an aircraft comprising an energy storage device provided with a quenching arrangement.
Fig. 2 is a schematic cross-sectional view of the vehicle shown in Fig. 1 along the cross-sectional line A-A depicted therein.
Fig. 3 is a schematic illustration of the energy storage device comprising the quenching arrangement.
Fig. 4 is a schematic illustration of a quenching agent containing a propellant.
Fig. 5 is a schematic illustration of a quenching agent provided with a propelling charge.
Fig. 6 is a schematic illustration of a combined mixing unit and a heat exchange unit of the quenching arrangement shown in Fig. 3.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

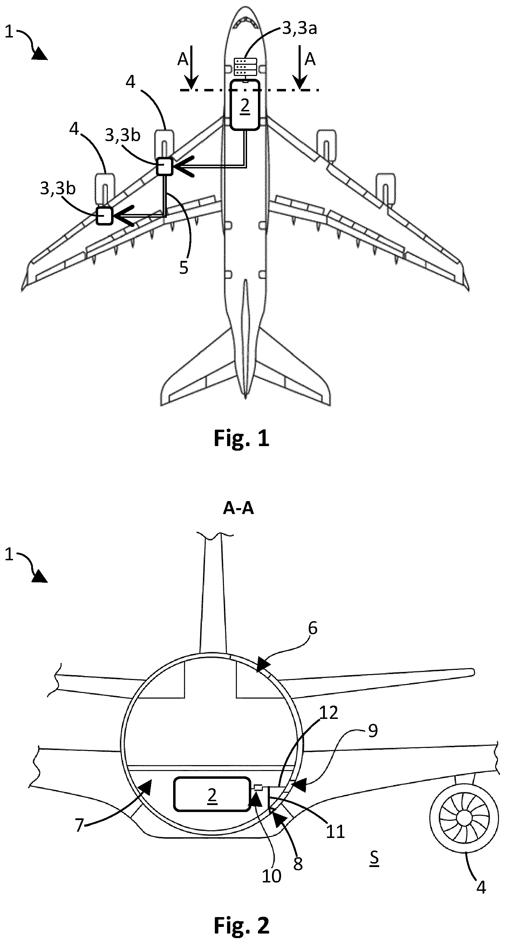

Fig. 1 is a schematic illustration of a vehicle 1 in the form of an aircraft comprising an energy storage device 2, for example, an electrochemical battery. The energy storage device 2 may supply a number of energy consumers 3 of the vehicle 1, such as electronic equipment 3a and/or electric motors 3b for driving propulsion devices 4, e.g., propellers, wheels, or alike, for propelling the vehicle 1. Energy, in particular electric power, can be provided from the energy storage device 2 to the energy consumers 3 via the transmission lines 5.

Fig. 2 is a schematic cross-sectional view of the vehicle 1 shown in Fig. 1 along the cross-sectional line A-A depicted therein. Here it becomes apparent that the vehicle 1 comprises a hull 6 as part of its body, e.g., in the form of the fuselage, surrounding an interior space 7 of the vehicle 1 accommodating the energy storage device 2. The hull 6 is provided with an inlet opening 8 and an outlet opening 9 from and to, respectively, ambient surroundings S of the vehicle 1.

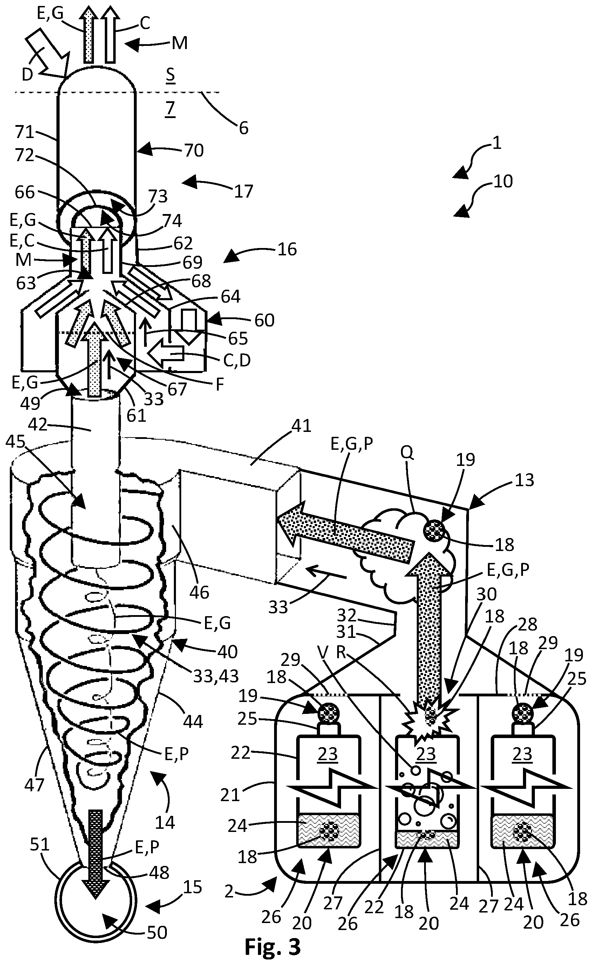

A quenching arrangement 10 is provided to the vehicle 1 and can be regarded as being connected to and/or integrated into the energy storage device 2. The quenching arrangement 10 has an inlet duct 11 connecting to the inlet opening 8 and an outlet duct 11 connecting to the outlet opening 9. A cooling agent C and/or cooling medium D, such as ambient air from the ambient surroundings S may be taken in through the inlet opening 8 in order to be provided to the quenching arrangement 10 through the inlet duct 11, while the quenching arrangement 10 may discharge exhausts E from the energy storage device 2 via the outlet duct 12 through the outlet opening 9 to the ambient surroundings S (see Fig. 3).

Fig. 3 is a schematic illustration of the energy storage device 2 comprising the quenching arrangement 10 as a partially sectional view. The quenching arrangement 10 further comprises a conduit 13, a particle separator 14, a particle container 15, a mixing unit 16, and/or a heat exchange unit 17. Furthermore, a quenching agent 18 is provided. The quenching agent 18 can be contained at least one depot 19 arranged within the energy storage device 2 and/or the quenching arrangement 10.

The energy storage device 2 comprises a number of energy storage units 20 and an enclosure 21. The energy storage units themselves may have a housing 22 which can provide a hermetically sealed interior 23. The housing may have a cylindrical, rectangular and/or any other kind of shape desired or required for a respective application of the energy storage device 2. The interior 23 may contain a fluid 24, for example, an electrolyte if the energy storage units 20 are embodied as electrochemical batteries. Each housing 22 may comprise a burst element 25, for example, arranged on top of the housing 22, and configured such that it breaks if a temperature and/or pressure within the housing 22 exceeds a certain threshold, thus generating a burst load. Through breaking, the burst element 25 provides a predefined opening.

The enclosure 21 may comprise compartments 26 separate from each other by dividing walls 27. Each of the compartment may accommodate at least one energy storage unit 20. An outer wall 28, in particular top wall portion, of the enclosure 21 may be provided with at least one predetermined breaking point 29, for example, arranged on top of the enclosure 21, preferably for each compartment 26, and configured such that it breaks if a temperature and/or pressure within the enclosure 21 and/or the respective compartment 26, exceeds a certain threshold, thus generating a load that is sufficient to break the predefined breaking point 29. Through breaking, the burst element 29 provides a predefined exhaust passage 30 opening towards the conduit 13.

The conduit 13 may comprise a manifold 31 and an exhaust line 32. The manifold 31 can be arranged such that it collects any exhausts E ejected from the energy storage device 2, in particular exhausts E that are ejected through the exhaust passages 30. The manifold 31 therefore serves as an inlet of the conduit 13 connected to the energy storage device 2. The exhaust line 32 of the conduit 13 may lead the exhausts E to the particle separator 14. Thereby, the conduit 13 defines a flow path 33 for the exhausts E.

The particle separator 14 may comprise a separation vessel 40, a vessel inlet 41 and a dip tube 42 which may be arranged such that the particle separator 14 is configured as a cyclone vessel for separating the exhausts E into exhaust gas G and exhaust particles P along a separation path 43. Therefore, the separation vessel 40 has vessel wall 44 at least partially surrounding a vessel interior 45 and forming an upper cylindrical portion 45 as well as a lower conical portion 47 of the separation vessel 40. The dip tube 42 extends centrally into the separation vessel 40 such that is arranged essentially coaxially with respect to the upper cylindrical portion 46 and the lower conical portion 47 of the separation vessel 40.

The vessel inlet 41 can connect to the exhaust line 32 and be arranged such that it leads the exhausts E, containing the exhaust gas G and exhaust particles P, into a cylindrical upper portion of the separation vessel 40 tangentially along the vessel wall 44 such that the exhausts E first circulate in the form of a cyclone around the dip tube 42 and then travel from the cylindrical portion 46 downwards into the conical portion 47 along the separation path 43 which can be regarded as part of the flow path 33. While the exhaust particles P can descent along the separation path 43 in order to then be ejected from the particle separator 14 through a particle outlet 48, for example, an orifice formed at the lower end of the separation vessel 40, in particular the conical portion 47 thereof, the exhaust gas G can flow upwards, i.e., ascent, along the centre of the cyclone flow to then enter the dip tube 42 from below and exit the dip tube 42 through a gas outlet 49 of the particle separator 14.

Alternatively, or additionally, the particle separator 14 may comprise a separation vessel 40 in a horizontal arrangement for axial separation of the exhaust particles P from the exhaust gas G. In such an arrangement, the dip tube 42 may be arranged on a side of the separation vessel 14 opposing the vessel inlet 41. Guide vanes (not shown) can cause the exhausts E to circulate around a central axis of the separation vessel 40 along the separation path 43. Separated exhaust particles P may exit the separation vessel 40 through a circumferential slit (not shown) between the vessel wall 44 and a separation wall (not shown) in order to be then led into the particle outlet 48. In any case, it should be assured that potentially harmful exhaust particles P, in particular those, who may have a temperature above an ignition temperature of the exhaust gas G are separated from the exhaust gas G.

The particle container 15 can comprise a receptacle 50 at least partially surrounded by a receptacle wall 21. The receptacle 50 and/or the receptacle wall 51 can be formed of particularly heat resistant material providing that the particle container 15 may withstand high temperatures. The exhaust particles P may thus be safely contained in the particle container 15. Alternatively, or additionally, the exhaust particles P may be discharged separately from the exhaust gas G in order to avoid any ignition of the exhaust gas G by the exhaust particles P. In such an arrangement, the particle container 15 could serve as an/or be replaced by a particle discharge line.

The mixing unit 16 may comprise the mixing vessel 60, an exhaust inlet 61, and a coolant inlet 62. The mixing vessel 60 provides a mixing chamber 63 which may be regarded as a part of the flow path 33 for the exhausts E. The mixing chamber 60 is surrounded by mixer walls 64 defining the flow path 33 not only for the exhausts E, but also a coolant flow path 65 for the for a cooling agent C, to lead the exhausts E and the cooling agent C into the mixing chamber 63 in order to create an exhaust mixture M which are then led out of the mixing unit 16 from a mixer outlet 66.

The exhaust inlet 61 of the mixing unit 16 may be configured such that it provides or is followed by a stilling section 67 for stilling the exhausts E. Therefore, the stilling section 67 may, for example, comprise an expansion element or expansion device for at least temporarily expanding and thus lowering a pressure of the exhausts which may help to decrease the temperature, particularly if a cooling medium D is used for cooling the stilling section 67. The stilling section 67 may also enable remaining particles P within the exhausts E to settle to thus avoid that they clog the mix unit 16 and/or enter the mixing chamber 63, where they made cause an ignition of the exhausts as the mixing agent C may contain oxygen. Furthermore, in the region of the exhaust inlet 61 of the mixing unit 16, a filter element F, such as the screen, mesh, and/or a scrubbing solution or alike, may be provided for filtering out remaining particles P.

A nozzle 68 may follow the exhaust inlet 61 and/or stilling section 67. The nozzle may be configured as a Venturi nozzle and/or Laval nozzle such that the exhausts E constitute an input volume and the cooling agent C constitutes a complimentary volume that are joined in the mixing chamber 63 in order to be then discharged through an outlet tube 69 of the mixing unit 16, in particular the mixing vessel 60 thereof. In such an arrangement of the nozzle 68, the mixing chamber 63 and/or the outlet tube 69 may be configured to provide a diffuser for discharging the exhausts E from the mixing unit 16 while the coolant inlet 62 may become a suction inlet. The mixing tube 69 may provide the mixer outlet 66 connecting to the heat exchange unit 14 and/or can already be a part of the exchange unit 14.

The heat exchange unit 17 may comprise a cooling vessel 70 and/or coolant pipe 71 and at least one exhaust pipe 72. The cooling vessel 70 and/or coolant pipe 71 may be configured as a duct surrounding the exhaust pipe 72. For example, the inlet duct 11 may at least in part provide the cooling vessel 70 and/or coolant pipe 71, while the outlet duct 12 may at least in part provide the exhaust pipe 72. In the present example, the exchange unit 17 and the mixing unit 16 are configured such, that the cooling medium D becomes the cooling agent C, for example, in the form of air from the ambience surroundings S.

The cooling vessel 70 and/or coolant pipe 71 may have a coolant outlet 73 which can be connected to the coolant inlet 62 of the mixing unit 16, and/or merged therewith. In other words, the coolant pipe 71 may be configured such that it transports the cooling medium D along the mixing unit 16 such that the cooling medium D may at least partially cool down the exhausts E. For example, the cooling vessel 70 and/or coolant pipe 71 may at least partially surround the stilling section 67 and/or the nozzle 68. Hence, the cooling medium D may be used for cooling the exhausts E, for example, in a counter flow arrangement in the heat exchange unit 17 and/or in the region of the outlet tube 69, to be then deflected are guided such that in the region of the stilling section 67 and/or the nozzle 68, a parallel flow arrangement of the cooling medium D and the exhausts E is provided.

The exhaust pipe 72 of the heat exchange unit 17 can provide an exhaust inlet 74. The exhaust mixture M may enter the heat exchange unit 17, in particular the exhaust pipe 72, through the exhaust inlet 74. In the present example, the exhaust inlet 74 is connected to the mixer outlet 66. Here, the outlet tube 69 may become and/or provide the exhaust pipe 72. In the region of the mixer outlet 66, the exhaust E and the cooling medium D may be guided and a counter flow arrangement.

The coolant pipe 71 can be connected to the inlet opening 8. The exhaust pipe 72 can be connected to the outlet opening 9. The cooling medium D may therefore be taken in, for example, sucked in, from the ambience surroundings S of the vehicle 1 through the inlet opening 8 into the coolant pipe 71, therefore at least partially extending through the hull 6 and within the interior space 7 of the vehicle 1. The exhausts E, in particular the exhaust mixture M, for example, containing the exhaust gas G and the cooling agent C, can be discharged from the exhaust pipe 72 through the outlet opening 9.

In the present example, in operation of the vehicle 1, a technical failure may occur in the energy storage device 2. The technical failure may lead to a reaction R, which may be an exothermic reaction. The reaction R can be taking place in one of the energy storage units 20. Due to the reaction R, components of the energy storage unit 20 and/or the fluids 24 may evaporate and thus produce vapour V which may comprise the exhaust gas G and/or the exhaust particles P, and thereby at least partially contribute to the production of the exhausts E.

In order to mitigate potentially harmful effects of the reaction R within the energy storage unit 20, the quenching agent 18 can be provided within the energy storage unit 20, for example, in that the quenching agent 18 can be contained in the fluid 24, for example, as a dispersion, emulsion, and/or solution. Therefore, reaction R may already be inhibited or at least mitigated within the energy storage unit 20, such that the reaction R and/or any exhausts E may be contained within the housing 22 of the energy storage unit. In case, the reaction R cannot, or at least not completely, be inhibited within the energy storage unit 20, the burst element 25 may burst if a temperature and/or pressure caused by the reaction R and/or the exhausts E exceeds respective burst load of the burst element 25.

Alternatively, or additionally, potentially harmful effects of the reaction R and/or the exhausts E may be mitigated within as less or around the energy storage unit 20, in that the quenching agent 18 may be provided in the vicinity of the burst element 25, for example, in that the depot 19 containing the quenching agent 18 is provided within as this are around the burst element 25. The quenching agent 18 may thus be released into the reaction R and/or the exhausts E in the region of the burst element 25 which may help to quench the reaction R and/or the exhausts E in such a manner that they are it, respectively, may be contained within the respective compartment 26 of the enclosure 21 accommodating the energy storage unit 20. Should the enclosure 21 not have any compartments 26 or just provide a single compartment 26, the reaction R and/or the exhausts R may be contained within the enclosure 21 in general. Nevertheless, the compartments 26 and/or dividing walls 27 may help in stemming the reaction R and/or the exhausts E such that they do not spill over to other of the energy storage units 20 which are initially not affected by the reaction R.

In case, the reaction R cannot, or at least not completely, be inhibited within the enclosure 21 and/or the compartment 26 accommodating the respective energy storage unit 20 affected by the reaction R, the predetermined breaking point 29 of the enclosure 29 and/or the compartment 26, respectively, may break if a temperature and/or pressure caused by the reaction R and/or the exhausts E exceeds respective breaking load of the predetermined breaking element 29. The exhausts E may then be discharged from the enclosure 29 and/or the respective compartment 26 through the exhaust passage 30 provided.

The exhausts E can thus be taken up by the conduit 13 in a controlled manner, for example, in that the manifold 31 collects all exhausts E from the energy storage device 2 and leads them to the exhaust line 32. A further depot 19 containing the quenching agent 18 may be provided within the conduit 13. For example, at least one of the depots 19 may be provided within the manifold 31 and/or the exhaust line 32. In the present example, the depot 19 is arranged within the exhaust line 32, such that all exhausts E collected in the manifold 31 are forced to flow past the depot 19.

A quenching zone Q can be provided by the quenching agent 18 arranged within the conduit 13. For example, the quenching agent 18 may be released into the exhaust E from the at least one depot 19 arranged at an advantageous location within the flow path 33 of the exhausts E. The quenching agent 18 can thus form the quenching zone Q and/or a chemical and/or physical reaction between the quenching agent 18 and the exhaust E can lead to the formation of the quenching zone Q. Due to such a chemical and/or physical reaction between the quenching agent 18 and the exhausts E, further particles P may be formed, for example, through accumulation, coagulation, or alike.

In case the exhausts E cannot, or at least not completely, be contained and/or any reaction R within the exhausts E be inhibited within the quenching zone Q, the exhaust E further be led in a controlled manner along the flow path 33. In the present example, the exhausts E are then led into the particle separator 14. Within the particle separator 14, the particles P within the exhausts E, which may at least in part stem from the quenching agent 18 and/or a chemical and/or physical reaction between the quenching agent 18 and the exhausts E, can be separated from the exhaust gas G in order to the particle container 15. In the present example, the particles P can be safely contained within the receptacle 50 provided by the particle container 15.

Any remaining exhaust gas G can be led along the flow path 33 of the exhausts E into the mixing unit 16. Within the mixing unit 16, the exhausts E can be mixed with the cooling agent C. Before being brought into contact with the cooling agent C, the flow of exhausts E may be at least partially stilled within the stilling section 67 which may help to avoid that any remaining particles P and/or an excess flow of exhausts E enters the mixing chamber 63. Thereby, on the one hand, the flow of exhausts E may be controlled to neither clog the mixing unit 16, in particular nozzle 68 thereof, nought 2 create a choked flow within the mixing unit 16, in particular nozzle 68, which may impede discharge of the exhausts E. On the other hand, at least partially stilling the exhausts within the stilling section 67 may help to prevent that any particles P having a critical temperature may enter the mixing chamber 63 when they may ignite the exhaust mixture M. Alternatively, or additionally, the filter element F may be provided at the exhaust inlet 61 and/or within the stilling section 67 of the mixing unit 16. The mixing unit 16 can thus provide a controlled mixing and/or cooling of the exhausts E and thereby prevents any potentially harmful effects of the exhausts E.

In the present example, any remaining exhausts E, in particular the exhaust mixture M, are led from the mixing unit 16 into the heat exchange unit 17. In the heat exchange unit 17, the exhausts E can be further cooled down with the help of the cooling medium D. Thereby, potentially harmful effects of the exhausts E can be further prevented. The exhausts E as such are the exhaust mixture M can then be safely guided through the outlet duct 12 to be released from the vehicle 1 into the ambient surroundings S in a controlled manner, preferably at relatively low temperatures, thus preventing any potentially harmful effects of the exhausts E.

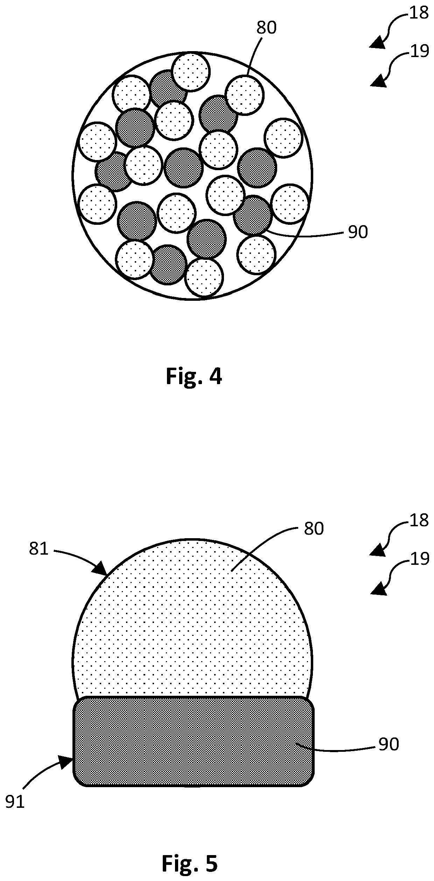

Fig. 4 is a schematic illustration of a quenching agent 18 containing a propellant. In the present example, a quenching compound 80 is admixed with a propellant compound 90. The quenching compound 80 and propellant compound 90 thus in combination provide the quenching agent 18. The quenching agent 18 can be shaped such that it is provided in the form of the depot 19. The propellant compound 80 can help to break up the depot 19 and thus dissipate the quenching agent 18 from within, in order to release the quenching agent 18 into the exhausts E and/or the reaction R.

Fig. 5 is a schematic illustration of the quenching agent 18 comprising a quenching charge 81 and a propelling charge 91. The quenching charge 81 can essentially be comprised of the quenching agent 18. The propelling charge 91 can essentially comprised of the propellant, i.e., the respective propellant compound 90. The propelling charge 91 can be arranged below and/or behind the quenching charge 81 in such a manner, that the propellant compound can help to break up the depot 19 and thus dissipate the quenching agent 18 from behind and/or below, respectively, in order to release the quenching agent 18 into the exhausts E and/or the reaction R.

As a quenching agent 18 and/or quenching compound 80, for example, potassium bicarbonate may be used. The propellant compound 90 may help to admix the quenching agent 18 and/or quenching compound 80 in the form of an aerosol to the exhausts E and/or the reaction R. In other words, the quenching agent 18 and/or quenching compound 80 may be emitted from the depot 19 to the exhausts and/or the reaction R in the form of extinguishing particles. Thereby, in case of that the reaction R leads to and/or takes place in form of a combustion, a respective the chain reaction of radicals participating in the reaction R can be blocked by the aerosol.

The aerosol can contain microparticles of the quenching agent 18 and/or quenching compound 80 which can be released upon and/or surround the exhausts E and/or the reaction R, e.g., a combustion flame (ionization), when getting in contact therewith. The particles can cool the flame and absorb heat to suppress the fire and/or provide endothermic reactions for converting heat back into chemical energy of preferably inert chemical compounds.

For example, the chemical effect (chain reaction inhibition) of the quenching agent 18 and/or quenching compound 80 containing potassium bicarbonate can be described as follows, based on the assumption that during the endothermic reaction R, for example, a combustion, free radicals generated O° H° OH° are generated which may trigger a chain reaction, while K° radicals are generated by the heat released from the reaction R, leading to respective intermediate products, namely mainly KOH, and H₂O:

K°+ OH° → KOH,

KOH + H° → K° + H₂O,

O° + H° → OH°,

H° + OH° → H₂O,

The intermediate products may further react as follows resulting in mainly potassium carbonate, carbon dioxide and water as final products:

KOH + CO₂ → K₂CO₃ (due to the presence of CO₂),

KHCO₃ → K₂CO₃ + CO₂ + H₂O (result).

The emission of the quenching agent 18 and/or quenching compound 80 can be triggered directly by heat or by an electronic system (not shown). A trigger temperature of the propellant compound 90 can be adjusted by certain chemical additives, e.g., Sulphur. A respective amount of quenching agent 18 and/or quenching compound 80 provided, for example, in the form of the depot 19, can be adjusted to respective parameters of the energy storage unit 20, in order to preferably completely inhibit and/or neutralise, or at least mitigate any potentially harmful reaction R and/or exhausts E.

Deviations from the above-described embodiments are possible without departing from the scope of the present invention. The quenching arrangement 10 may be configured such that a number of depots 19 containing quenching agent 18 and/or at least one quenching compound 80 can be provided per energy storage unit 20, such as a battery cell, as required or desired. The size of the depots 19 may be adjusted the respective requirements, such that bigger depots 19 can be used for a combined protection of the energy storage device 2 and/or smaller depots can be used for protecting the energy storage units 20 individually. Alternatively, or additionally to a thermal propellant compound 90, such as nitrocellulose, the quenching compound 80 and/or quenching charge 81 may be triggered by electrical power, gas detection, or alike, for example by means of respective sensors and actors (vent gas detection).

Inlet ducts 11, outlet ducts 12, conduits 13, particle separators 14, particle containers 15, mixing unit 16, and/or exchange unit 17 may be combined with each other and may be provided in any number required for achieving a desired degree of protection. For example, the particle separator 14 and mixing unit 16 may be combined in one device. A particle separator 14 are mixing unit 16 can be provided per energy storage unit 20, for a row of energy storage units 20 within an energy storage device 2, and/or for the entire energy storage device. Alternatively, or additionally, the particle separator 14 and/or filter element F may be provided with and/or as grids, meshes, and/or aerodynamic edges.

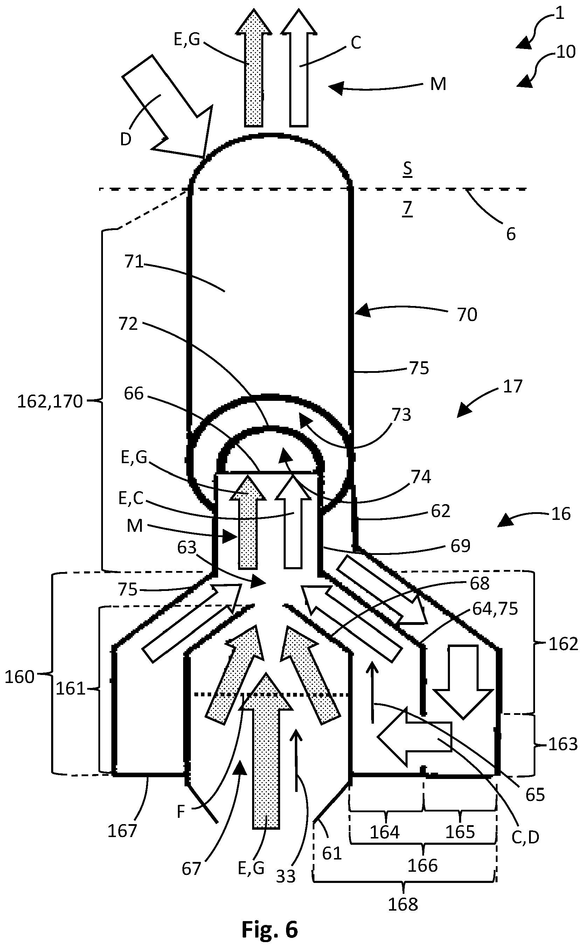

Fig. 6 shows a schematic illustration of the mixing unit 16 and the heat exchange unit 17 of the quenching arrangement 10 shown in Fig. 3. Here it becomes apparent that the mixing unit 16 and the heat exchange unit 17 are merged in that up and/or downstream of the mixing chamber 63, the flow path 33 can be cooled by means of the cooling medium D which may become the cooling agent D along the flow path. Therefore, the heat exchange unit 17 may at least partially surround the mixing unit 16, in particular the mixing chamber 63. Any mixer walls 64 of the mixing unit 16 may serve as cooler walls 75 of the heat exchange unit 17 and vice versa.

For example, the heat exchange unit 17 can comprise an encompassing arrangement 160 which may at least partially encompass and/or border at least a past of the mixing unit 16. In particular, the encompassing arrangement 160 may at least partially encompass the exhaust inlet 61, the mixing chamber 63 and/or the stilling section 67. Alternatively, or additionally, the encompassing arrangement 170 may at least partially encompass and/or border any part of the conduit 13 and/or any other part of the quenching arrangement 10 providing the flow path 33 in order to cool down the exhausts E and/or any part of the quenching arrangement 10 guiding the exhausts E.

The heat exchange unit 17, in particular the encompassing arrangement 160 thereof, may comprise and/or share the mixing vessel 60, exhaust inlet 61, coolant inlet 62, mixing chamber 63, mixer walls 64, coolant flow path 65, mixer outlet 66, stilling section 67, nozzle 68 and/or outlet tube 69 with and/or as a part of the mixing unit 16. The heat exchange unit 17 may provide a parallel flow parallel flow portions 161, counter flow portions 162 and/or cross flow portions 163 where the coolant flow path 65 is directed essentially in parallel, counter, and/or transverse, respectively, to the flow path 33 of the exhausts E. The cooler walls 75 of the heat exchange unit 17 may be arranged such that they provide exhaust cooling sections 164, where the cooler walls 75 separate the cooling medium D from the exhausts E, for providing exhausts cooling capabilities, self-cooling sections 165, where the cooler walls 75 separate inflowing cooling medium D from out flowing cooling medium D in order to provide self-cooling capacities, and redirecting sections 166 between the exhaust cooling sections 164 and the self-cooling sections 165 where the cooling medium D is being redirected.

The heat exchange unit 17, in particular the encompassing arrangement 160 thereof, may provide an inlet cooling section 167 where the cooling medium D is most likely separated from the exhausts E in an area where the highest exhaust temperatures may be encountered within the mixing unit 16 and/or heat exchange unit 17. Here, for example, a counter flow portion 162 and/or a cross flow portion 162 can be arranged to provide high cooling capacities. In respective areas where most reliable cooling capacities are required, overlap regions 168 of the heat exchange unit 17, in particular the encompassing arrangement hundred 160 thereof, may be arranged, where at least one exhaust cooling section 164 overlaps with at least one self-cooling section 165 in a projection running essentially perpendicularly to the respective flow paths 33, 65, such that at the same time, the exhausts E may be cooled, while the cooling medium D cooling the exhausts E can be cooled in addition. In contrast to that, a duct arrangement 170 of the heat exchange unit 17 with the cooling flow path 65 merely being arranged such that cooling capacities for cooling the flow path 33 of the exhausts E and/or the exhaust mixture M may be provided in regions where relatively low temperatures of the exhausts E, the cooling medium D and/or the exhaust mixture M, respectively, may be encountered.

In the present example, the exhausts E enter the combined mixing unit 16 and heat exchange unit 17 at the exhaust inlet 61. Here, the encompassing arrangement 160 is at least partially provided with an overlap region 168 such that both, the exhausts E to be cooled as well as the cooling medium D cooling the exhausts E can be a further inflowing cooling medium D. Additionally, any exhaust particles P remaining in the exhausts E at this stage can be separated from the exhaust gases G means of the filter element F which may require respective cooling as well. Hence, the filter element F can be provided in the region of the encompassing arrangement 160, thus benefiting from preferably high cooling capacities.

While the exhausts E entering the mixing unit 16 and/or he exchange unit 17 at the exhaust inlet 61 leading through the encompassing arrangement 160 may have a relatively high temperature, the cooling medium D can have a medium temperature as it has already taken up some heat from the cooling medium M itself, the exhausts E and/or the exhaust mixture M on its way from the inlet opening 8 to the exhaust inlet 61. While the temperature of the cooling medium D will further increase on its way through the mixing chamber 63 and/or the outlet opening 9, the temperature of the exhausts E will continuously decrease on its way from the exhaust inlet 61 to the outlet opening 9. Intermediate cooling of the cooling medium D can be provided in the overlap region 168, for example, in that the coolant flow path 65 is meandering such that self-cooling capacities are provided.

Thus, the encompassing arrangement 160 can bring the temperatures of the exhausts 160 down to a level, where they can be securely guided through the duct arrangement 170. The duct arrangement 170 may provide at least a part of the counter flow portion 162 of the heat exchange unit 17. Within the duct arrangement 170, the cooling pipe 71 and the exhaust pipe 72 may at least partly share a cooler wall 75.

At a certain point, the cooling pipe 71 and the exhaust pipe 72 may divert from each other to connect to the inlet opening 8 and the outlet opening 9, respectively. At this point, or at the point of diversion (not shown), the cooling medium D, the exhausts E and/or the exhaust mixture M should have a relatively low temperature, preferably the respective lowest temperature. In particular, the exhausts E and/or the exhaust mixture M should have a temperature close to the temperature of the surroundings S in order to enable a safe discharge of the the exhausts E and/or the exhaust mixture M.

### List of Reference Signs

- 1: vehicle / aircraft
- 2: energy storage device
- 3: energy consumers
- 3a: electronic equipment
- 3b: electric motor
- 4: propulsion device
- 5: transmission line
- 6: hull
- 7: interior space
- 8: inlet opening
- 9: outlet opening

- 10: quenching arrangement
- 11: inlet duct
- 12: outlet duct
- 13: conduit
- 14: particle separator
- 15: particle container
- 16: mixing unit
- 17: heat exchange unit
- 18: quenching agent
- 19: depot

- 20: energy storage unit
- 21: enclosure
- 22: housing
- 23: interior
- 24: fluid / liquid

- 25: burst element
- 26: compartment
- 27: dividing wall
- 28: outer wall
- 29: predetermined breaking point

- 30: exhaust passage
- 31: manifold
- 32: exhaust line
- 33: flow path

- 40: separation vessel
- 41: vessel inlet
- 42: dip tube
- 43: separation path
- 44: vessel wall
- 45: vessel interior
- 46: cylindrical portion
- 47: conical portion
- 48: particle outlet
- 49: gas outlet

- 50: receptacle
- 51: receptacle wall

- 60: mixing vessel
- 61: exhaust inlet
- 62: coolant inlet
- 63: mixing chamber
- 64: mixer walls
- 65: coolant flow path
- 66: mixer outlet
- 67: stilling section
- 68: nozzle
- 69: outlet tube

- 70: cooling vessel
- 71: coolant pipe
- 72: exhaust pipe
- 73: coolant outlet
- 74: exhaust inlet
- 75: cooler wall

- 80: Quenching compound
- 81: quenching charge

- 90: propellant compound
- 91: propelling charge

- 160: encompassing arrangement
- 161: parallel flow portion
- 162: counter flow portion
- 163: crossflow portion
- 164: exhaust cooling section
- 165: self-cooling section
- 166: redirecting section
- 167: inlet cooling section
- 168: overlap region

- 170: duct arrangement

- C: cooling agent
- D: cooling medium
- E: exhausts
- F: filter element
- G: exhaust gas
- M: exhaust mixture
- P: exhaust particles
- Q: quenching zone
- R: reaction
- S: ambient surroundings
- V: vapour

## Claims

1. Quenching arrangement (10) for quenching exhausts (E) of an energy storage device (2), such as an electrochemical battery in a vehicle (1), which may be produced due to a technical failure of at least one energy storage unit (20) of the energy storage device (2), the quenching arrangement (10) comprising a quenching agent (18) for quenching the exhausts (E), wherein the quenching agent (18) is contained on the outside of and/or within the at least one energy storage unit (20).

2. Quenching arrangement (10) according to claim 1, wherein the quenching agent (18) is contained in a fluid (24) within the at least one energy storage unit (20).

3. Quenching arrangement (10) according to claim 1 or 2, wherein the quenching agent (18) is held in at least one depot (19).

4. Quenching arrangement (10) according to claim 3, wherein the at least one depot (19) is arranged along a pre-defined exhaust flow path (33) for the exhausts (E).

5. Quenching arrangement (10) according to claim 3 or 4, wherein the at least one depot (19) is arranged in the exhaust flow path (33) such that the exhausts (E) are forced to move past and/or be mixed with the quenching agent (18).

6. Quenching arrangement (10) according to claim 4 or 5, wherein the exhaust flow path (33) is at least in part provided by a conduit (13) of the quenching arrangement (10) having at least one inlet connected to the at least one energy storage unit (20).

7. Quenching arrangement (10) according to according to at least one of claims 1 to 6, further comprising a particle separator (14) for separating particles () contained in the exhausts (E).

8. Quenching arrangement (10) according to at least one of claims 1 to 7, further comprising a mixing unit (16) configured to mix the exhausts (E) with a cooling agent (C).

9. Quenching arrangement (10) according to at least one of claims 1 to 8, further comprising a heat exchange unit (17) configured to transfer heat from the exhausts (E) to a cooling medium (D).

10. Quenching arrangement (10) according to at least one of claims 1 to 9, wherein the quenching agent (18) is at least in part provided in the form of a powder.

11. Quenching arrangement (10) according to at least one of claims 1 to 10, wherein the quenching agent (18) contains potassium bicarbonate.

12. Quenching arrangement (10) according to at least one of claims 1 to 11, wherein the quenching agent is configured to be propelled by and/or contains a propellant.

13. Quenching arrangement (10) according to claim 12, wherein the propellant contains nitrocellulose.

14. Energy storage device (2), in particular an electrochemical battery for a vehicle (1), comprising a quenching arrangement (10) according to at least one of claims 1 to 13 for quenching exhausts (E) which may be produced due to a technical failure of at least one energy storage unit (20) of the energy storage device (2).

15. Vehicle (1), in particular an aircraft, comprising a quenching arrangement (10) according to at least one of claims 1 to 13 and/or an energy storage device (2) according to claim 14.
